# EUROPEAN PATENT APPLICATION

(11) **EP 0 887 985 A1**
(43) Date of publication of application: **30.12.1998**
(21) Application number: 98103300.4
(22) Date of filing: 25.02.1998
(51) Int. Cl.: H04M 1/72

(54) **Portable communication device**

(30) Priority: 25.06.1997 JP 168557/97
(71) Applicant: Sharp Kabushiki Kaisha, Osaka 545-8522 (JP)
(72) Inventor: Nakagawa, Tatsuhide, Higashihiroshima-shi, Hiroshima 739-0012 (JP)
(74) Representative: Müller, Frithjof E., Dipl.-Ing.

(57) **Abstract**

When it is determined based on a detecting signal from a detecting section that a device main body is set to a charger and a vibration receiving informing method is set, upon detecting a receiving of data, a portable communication device prohibits the vibration receiving informing method to be executed, and informs the user of the receiving of data by other receiving informing method. As the vibration receiving informing method is not executed in the state where the device main body is set to the charger, such problem associated with the vibration that the device main body is removed from the charger, or a noise is generated can be eliminated.

## Description

### FIELD OF THE INVENTION

The present invention relates to a portable communication device such as a portable telephone machine, a pager terminal equipment, etc.

### BACKGROUND OF THE INVENTION

Known portable communication devices include portable telephone machines, pager terminal equipments, etc. For these portable communication devices, the user is informed of a receiving of data by generating a ringing tone, emitting light, etc., to the outside, or by vibrating a device main body by a vibrator, etc.

Among the described receiving informing methods, the vibration receiving informing method is superior to other receiving informing methods in that a receiving of data can be recognized without interrupting the surroundings.

However, the described vibration receiving informing method has a drawback in that when the portable communication device receives data, for example, in a state where a main body thereof is set to a charger, the main body may be moved by the vibration and may be displaced or removed from the charger.

Additionally, in the case where the main body is set to the charger, for example, placed on a desk, the resulting vibration generates a noise between the main body and the charger, which would disturb the user as well as the surroundings.

### SUMMARY OF THE INVENTION

It is an object of the present invention to provide a portable communication device provided with a function of informing the user of a receiving of data by vibrating a device main body, which is free from such problem associated with the vibration that the device main body is removed from a charger or noise is generated which would occur when data is received in a state where the device main body is set to the charger.

In order to achieve the above object, a portable communication device in accordance with the present invention which is provided with vibration receiving informing means which informs a user of a receiving of data by vibrating the device main body which can be installed in a charger for charging upon receiving the data is arranged so as to include: detection means for detecting if the device main body is set to the charger; and control means which prohibits a receiving of data by said vibration receiving informing means based on a detection signal from said detection means.

According to the portable communication device of the described arrangement, when it is detected by the detecting section that the device main body is set to the charger, the control section controls the device so as to prohibit the vibration receiving informing function to be executed by the vibration receiving informing section, thereby preventing such problems associated with the vibration that the device main body is removed from the charger, or a noise is generated.

The novel features which are considered as characteristic of the invention are set forth in particular in the appended claims. The improved treatment method, as well as the construction and mode of operation of the improved treatment apparatus, will, however, be best understood upon perusal of the following detailed description of certain specific embodiments when read in conjunction with the accompanying drawings.

### BRIEF DESCRIPTION OF THE DRAWINGS

Fig. 1 is a block diagram schematically showing a structure of the electrical functions of the portable communication device in accordance with an embodiment of the present invention; and
Fig. 2 is a flowchart showing a flow of processes of a control operation of the portable communication device of Fig. 1 upon receiving data.

### DESCRIPTION OF THE EMBODIMENTS

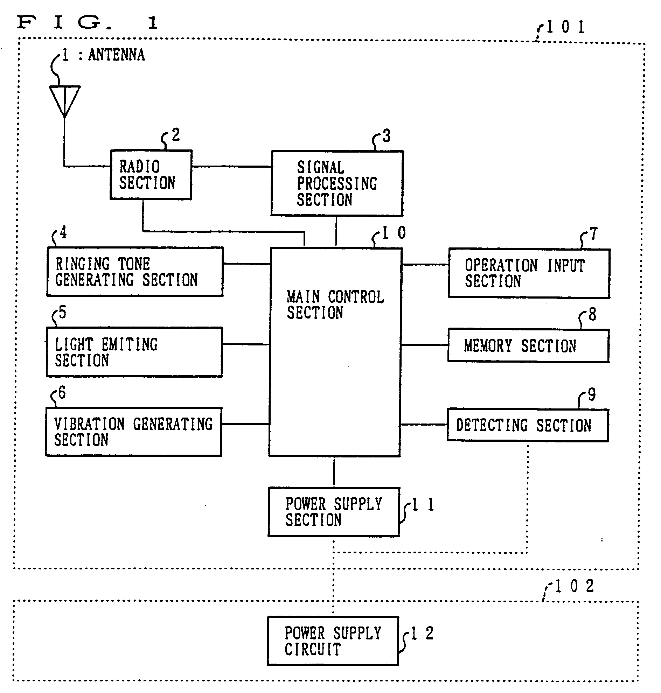

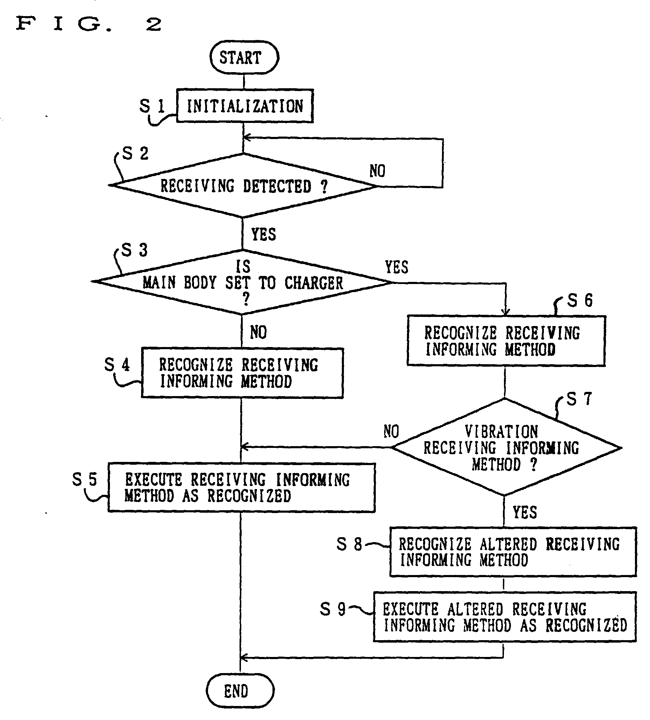

The following descriptions will explain one embodiment of the present invention in reference to Fig. 1 and Fig. 2.

As shown in Fig. 1, the portable communication device in accordance with the present embodiment includes a device main body 101 for the user of the portable communication device, and a charger 102 for charging the device main body 101. When charging the device main body 101, it is set to a predetermined position of the charger 102.

The device main body 101 includes a radio section 2 capable of communicating with an exchange (not shown) by transmitting and receiving a signal via an antenna, a signal processing section 3 for processing a signal as transmitted or received by the radio section 2, a ringing tone generating section 4 (receiving informing means) for generating a ringing tone to the outside of the device main body 101 upon receiving data, a light emitting section 5 (receiving informing means) for emitting light to the outside of the device main body 101 upon receiving data, a vibration generating section 6 (receiving informing means) for vibrating the device main body 101 upon receiving data, an operation input section 7 which enables various functions such as a data receiving informing function, etc., to be set in the device main body 101, a memory section 8 for storing the functions as set in the device main body 101 by the operation input section 7.

The receiving informing methods as stored in the memory section 8 include: (i) a ringing tone receiving informing method by the ringing tone generating section 4; (ii) a light receiving informing method by the light emitting section 5; and (iii) a vibration receiving informing method by the vibration generating section 6. Therefore, the device main body 101 can inform the user of a receiving of data by the method as selected among the above three methods (i) through (iii). Specifically, the user selects the receiving informing method as desired among the above three methods by operating the operation input section 7.

In the described memory section 8, an altered receiving informing method is also stored other than the described three receiving informing methods (i) through (iii). The altered receiving informing method may be the function of prohibiting the selection of the vibration receiving informing method, or a function of setting either the ringing tone receiving informing method or the light receiving informing method in such a manner that the user cannot alter the method as set.

The device main body 101 further includes a detecting section 9 (detection means) for detecting if the device main body 101 is set to the charger 102, a power supply section 11 which stores an electric power to be supplied to respective sections of the device main body 101, and a main control section 10 (control means) for controlling respective sections of the device main body 101.

The detecting section 9 is constituted, for example, by a circuit which detects if the device main body 101 is set to the charger 102 by determining if an electric power is supplied to the device main body 101 from the power supply circuit 12 of the charger 102. Namely, as shown in Fig. 1, in the state where the device main body 101 is set to the charger 102, the detecting section 9 is electrically connected to the power supply circuit 12 of the charger 102, so as to detect if a power is supplied from the power supply circuit 12.

The power supply section 11 is composed of, for example, batteries, and in the state where the device main body 101 is set to the charger 102, the power supply section 11 is electrically connected to the power supply circuit 12 of the charger 102. Therefore, in the state where the device main body 101 is set to the charger 102, an electric power is supplied from the power supply circuit 12 to the power supply section 11 to be stored therein.

The main control section 10 controls, for example, transmission/receiving of the signal by the radio section 2, processing of a signal by the signal processing section 3, generation of a ringing tone by the ringing tone generating section 4, emission of light by the light emitting section 5, generation of vibrations by the vibration generating section 6, writing/reading out of information in and from the memory section 8, etc.

The transmission and receiving of signal is controlled based on a signal as processed by the signal processing section 3, various instructions given through the operation input section 7 and the data as stored in the memory section 8 and the detection signal from the detecting section 9, etc.

Specifically, if it is detected that the vibration receiving informing method is set based on the detection signal by the detecting section 9, the main control section 10 prohibits the driving of the vibration generating section 6 and adopts other receiving informing method, i.e., activates the ringing tone generating section 4 or the light emitting section 5.

The flow of the processes of controlling a transmission and receiving of data by the portable communication device having the described arrangement will be explained in reference to the block diagram shown in Fig. 1 and the flowchart shown in Fig. 2.

First, an initialization is performed (S1). For the initialization, the receiving informing method and the altered receiving informing method are set by the user based on the input through the operation input section 7. As a result, the main control section 10 stores the receiving informing method and the altered receiving informing method as selected in a predetermined area of the memory section 8.

Thereafter, after the initialization has been completed, a receiving of data is detected (S2). Specifically, a receiving signal for calling the own communication device from a transmitting end (not shown) is subjected to a predetermined process by the signal processing section 3 via the radio section 2. Namely, the receiving signal is once received by the radio section 2 via an antenna 1 before being transmitted to the communication device of the receiving end. Then, it is determined by the main control section 10 if the data of the receiving signal as processed is for calling the own communication device.

If it is determined in S2 that the receiving signal is for calling the own communication device, it is determined if the device main body 101 is set to the charger 102 based on a detection signal from the detecting section 9 (S3).

In S3, if it is determined that the device main body 101 is not set to the charger 102, a recognition of the receiving informing method is performed (S4). Namely, the main control section 10 recognizes the receiving informing method as stored in the memory section 8 for the initialization.

Then, the receiving informing method as recognized in S4 is executed (S5). Specifically, if the receiving informing method as stored in the memory section 8 is the ringing tone receiving informing method, the main control section 10 controls the ringing tone generating section 4 to inform the user of a receiving of data by generating a ringing tone. On the other hand, if the receiving informing method as stored in the memory section 8 is the light receiving informing method, the main control section 10 controls the light emitting section 5 to inform the user of a receiving of data by emitting light. Similarly, if the receiving informing method as stored in the memory section 8 is a vibration receiving informing method, the main control section 10 controls the vibration generating section 6 to inform the user of a receiving of data by vibrating the device main body 101.

On the other hand, in S3, if it is determined that the device main body 101 is set to the charger 102, a recognition of the receiving informing method is performed in the same manner as S4 (S6). Namely, the main control section 10 recognizes the receiving informing method as stored in the memory section 8 for the initialization.

Then, it is determined if the receiving informing method as recognized is the vibration receiving informing method (S7). If not in S7, a sequence goes back to S5 where the receiving of data is informed by the receiving informing method as recognized by the main control section 10. Namely, by controlling other receiving informing means than the vibration generating section 6, i.e., either the ringing tone generating section 4 or the light emitting section 5 in this example, the user is informed of the receiving of data by generating a ringing tone or emitting light.

On the other hand, if it is determined that the receiving informing method as recognized in S7 is the vibration receiving informing method, a recognition of the altered receiving informing method is performed (S8). Namely, the main control section 10 recognizes the altered receiving informing method as stored for the initialization Then, a receiving of data is informed by the altered receiving informing method as recognized in S8 (S9). Namely, the main control section 10 prohibits the vibration receiving informing method to be executed by the vibration generating section 6, and informs the user of the receiving of data by controlling the ringing tone generating section 4 or the light emitting section 5 so as to generate a ringing tone or emit light based on the altered receiving informing method as recognized in S8.

By controlling the operation in the described manner, when the device main body 101 receives data in the state where it is set to the charger 102, the vibration receiving informing method is prohibited to be executed by the vibration generating section 6, and such problem that the device main body 101 is removed or dropped from the charger 102 by the vibration can be prevented. Additionally, as the device main body 101 does not vibrate in the state where it is set to the charger 102, a generation of noise between the charger 102 and the desk on which the charger 102 is placed can be prevented, thereby preventing an increase in the discomfort index of the user as well as the surroundings.

Moreover, problems associated with the vibration such as an insufficient charge of the device main body 101, or an unwanted removal of the device main body 101 can be prevented. In the meantime, as the user can be informed of a receiving of data by other receiving informing method, even in the state where the device main body is set to the charger, the user can recognize a receiving of data with accuracy.

In the present embodiment, explanations have been given through the case where the detecting section 9 (detection means) for detecting that the device main body 101 is set to the charger 102 is provided in the device main body 101; however, the present invention is not limited to this arrangement. For example, it may be arranged such that the detecting section 9 is provided in the charger 102. This arrangement offers an additional effect of reducing a size of the device main body 101.

Without further analysis, the foregoing will so fully reveal the gist of the present invention that others can, by applying current knowledge, readily adapt it for various applications without omitting features that, from the standpoint of prior art, fairly constitute essential characteristics of the generic and specific aspects of the instant contribution to the art and, therefore, such adaptations should and are intended to be comprehended within the meaning and range of equivalence of the appended claims.

## Claims

1. A portable communication device provided with vibration receiving informing means which informs a user of a receiving of data by vibrating the device main body which can be installed in a charger for charging upon receiving the data, comprising:
detection means for detecting if the device main body is set to the charger; and
control means which prohibits a receiving of data by said vibration receiving informing means based on a detection signal from said detection means.

2. The portable communication device as set forth in claim 1, wherein:
said control means controls such that when it is prohibited to inform the user of a receiving of data by said vibration receiving informing means based on the detection signal by said detection means, the user is informed of a receiving of the data by other receiving informing means.

3. The portable communication device as set forth in claim 2, wherein:
said other receiving informing means to be adopted when it is prohibited to inform the user of a receiving of data by the vibration receiving informing means is ringing tone generation means.

4. The portable communication device as set forth in claim 2, wherein:
said other receiving informing means to be adopted when it is prohibited to inform the user of a receiving of data by the vibration receiving informing means is light emitting means.
